# EUROPÄISCHE PATENTSCHRIFT

(11) **EP 0 396 873 B1**
(45) Veröffentlichungstag und Bekanntmachung des Hinweises auf die Patenterteilung: **02.06.1993**
(21) Anmeldenummer: 90104827.2
(22) Anmeldetag: 14.03.1990
(51) Int. Cl.: B62D 25/18

(54) **Schmutzfangeinrichtung**
Mud flap
Bavette de garde-boue

(30) Priorität: 10.05.1989 DE 8905826 U
(43) Veröffentlichungstag der Anmeldung: 14.11.1990
(73) Patentinhaber: KÖVER GMBH & CO. KG Metall- und Kunststoffverarbeitung, D-21614 Buxtehude (DE)
(72) Erfinder: Jürges, Heinz-Henning, D-2150 Buxtehude (DE)
(74) Vertreter: Grättinger, Günter

(56) Entgegenhaltungen:
- EP-A- 0 134 156
- DE-A- 1 755 262
- DE-A- 2 045 212
- DE-A- 3 102 805

## Beschreibung

Die Erfindung betrifft eine Schmutzfangeinrichtung zum Zusammenwirken mit einem Kotflügel eines Fahrzeuges.

Derartige Schmutzfangeinrichtungen sind in zahlreichen Ausführungsformen bekannt und im Einsatz. So kann die Schmutzfangeinrichtung als Schmutzfänger, welcher an der Unterkante eines Kotflügels befestigt wird, als Auskleidung eines Kotflügels oder als dessen innere Oberflächenstruktur ausgebildet sein z.B. DE-A- 1755262. Ferner ist die Gestaltung von Schmutzfangeinrichtungen als Blende oder seitliche Verkleidung möglich.

Schmutzfangeinrichtungen dienen in erster Linie dazu, von den Rädern des Fahrzeugs aufgeschleuderte Teilchen, wie z.B. Steine, sowie aufgewirbelte Tropfen und Tröpfchen abzufangen und auf die Straßenoberfläche zurückzulenken. Auf diese Weise soll der nachfolgende Verkehr vor einer Gefährdung durch aufgeschleuderte Steinchen etc. sowie einer Sichtbehinderung durch aufgewirbelte Wassertröpfchen geschützt werden.

Während Festkörper von den bekannten Schmutzfangeinrichtungen im allgemeinen in zufriedenstellender Weise eingefangen werden, ist das Ergebnis beim Einfangen von aufgewirbelter Nässe unbefriedigend. Beim Auftreffen von aufgeschleuderten Flüssigkeitstropfen auf die nasse Schmutzfangeinrichtung bilden sich vielmehr zahlreiche feine und feinste Tröpfchen, die zu einer Sprühnebelbildung und damit zu einer u.U. noch verstärkten Sichtbehinderung für den nachfolgenden Verkehr führen. Die Bildung von Sprühnebel wird darüber hinaus bei hoher Geschwindigkeit des Fahrzeuges dadurch begünstigt, daß der i.a. stark verwirbelte Fahrtwind aus dem auf bekannten Schmutzfangeinrichtungen aufliegenden Wasserfilm feinste Tröpfchen herauslöst und zerstäubt.

Der Erfindung liegt die Aufgabe zugrunde, eine gattungsgemäße Schmutzfangeinrichtung zu schaffen, die die Bildung von Sprühnebel weitgehend unterdrückt. Ferner soll die Schmutzfangeinrichtung ein hohes Maß an Selbstreinigungswirkung aufweisen.

Erfindungsgemäß wird die Aufgabe dadurch gelöst, daß die dem Fahrzeugrad zugewandte Seite der Schmutzfangeinrichtung im wesentlichen elliptische Kanäle mit schlitzförmigen Eintrittsöffnungen aufweist, deren geringste Abmessung kleiner ist als die kleine Halbachse der elliptischen Kanäle, und daß den Eintrittsöffnungen sich in Richtung auf das Fahrzeugrad erweiternde Einfangtrichter vorgeschaltet sind, welche zwischen je zwei, eine im wesentlichen dreiecksprismatischen Form besitzenden Köpfen von zwischen je zwei Kanälen angeordneten Rippen gebildet werden. Dadurch, daß die von der Schmutzfangeinrichtung eingefangene Feuchtigkeit sich in Kanälen sammelt, welche hinter einer relativ schmalen Eintrittsöffnung liegen, wird weitgehend verhindert, daß aufgeschleuderte Tropfen beim Auftreffen auf den Schmutzfänger aus der auf diesem bereits angesammelten Flüssigkeit feine Tröpfchen herausschlagen. Die in den Kanälen angesammelte Nässe ist wegen der verglichen mit den Kanalabmessungen schmalen Eintrittsöffnung auch wirksam vor Luftwirbeln geschützt, welche bei bekannten Schmutzfangeinrichtungen durch Zerstäubungseffekte zur Bildung von Sprühnebel beitragen. Durch die sich in Richtung auf das Fahrzeugrad erweiternden Einfangtrichter läßt sich die Bildung von Sprühnebel noch weitgehender unterdrücken, weil durch die Einfangtrichter die auf der Oberfläche der Schmutzfangeinrichtung befindliche Nässe besonders wirksam den Kanälen zugeleitet und die frontale senkrecht stehende Stirnfläche der Schmutzfangeinrichtung verringert wird. Die Stärke des Feuchtigkeitsfilms auf der Schmutzfangeinrichtung zwischen je zwei Eintrittsöffnungen läßt sich auf diese Weise in einem Maß reduzieren, daß ein Herausschlagen von Tröpfchen beim Auftreffen von aufgeschleuderten Tropfen in nennenswertem Maß nicht mehr stattfindet.

Durch den im wesentlichen elliptischen Querschnitt der Kanäle werden Innenkanten, in welchen sich bevorzugt Ablagerungen bilden, wirksam vermieden. Somit besitzt die erfindungsgemäße Schmutzfangeinrichtung günstige Eigenschaften hinsichtlich ihrer Selbstreinigung. Durch die Bemessung der Kanäle in der Weise, daß deren kleine Halbachse größer ist als die geringste Abmessung der Eintrittsöffnungen, ist in jedem Falle sichergestellt, daß Steinchen, die durch die Eintrittsöffnungen in die Kanäle gelangen, durch Selbstreinigungseffekte sicher abtransportiert werden. Bevorzugt besitzen die Kanäle auf der erfindungsgemäßen Schmutzfangeinrichtung eine vertikale Ausrichtung. Auf diese Weise wird der Abfluß der in den Kanälen angesammelten Feuchtigkeit begünstigt. Besonders vorteilhaft ist es dabei, wenn sich die Kanäle von oben nach unten konisch erweitern, wodurch der Abfluß der gesammelten Feuchtigkeit weiter begünstigt wird.

Das Verhältnis der geringsten Abmessung der Eintrittsöffnungen zu der kleinen Halbachse der Kanäle kann je nach Anwendungsfall der Schmutzfangeinrichtung variieren. Unter üblichen Bedingungen ist beispielsweise ein Verhältnis zwischen 0,3 und 0,7 günstig.

Bevorzugt sind die Eintrittsöffnungen auf der Mitte der Kanäle oder geringfügig dazu versetzt angeordnet; es ist aber auch die Anordnung der Eintrittsöffnungen in der Nähe der Ränder der Kanäle möglich. Bei einer exentrischen Anordnung würde jedoch die Möglichkeit bestehen, daß das in den Kanälen angesammelte Wasser durch in den Kanal eindringende Luft verwirbelt wird, nämlich insbesondere dann, wenn die Querschnittsform des Kanals zugleich die Bildung einer Wirbelwalze innerhalb desselben begünstigt.

Der dreiecksprismatische Kopf ist bevorzugt hohl ausgeführt. Dies hat den Vorteil, daß wegen der daraus resultierenden höheren Flexibilität der Oberfläche verglichen mit einer massiven Ausführung des Kopfes auf der Schmutzfangeinrichtung angesammelter und angetrockneter Schmutz leicht abblättert. Bei einer derartigen Ausgestaltung braucht die Schmutzfangeinrichtung im allgemeinen keiner Reinigung unterzogen zu werden. Die die Köpfe tragenden Stege der Rippen sind bevorzugt so schmal und flexibel ausgebildet, daß die Köpfe sich gegeneinander bewegen können. Auch durch dieses Merkmal wird die Selbstreinigung begünstigt.

Die Außenflächen der dem Fahrzeugrad zugewandten Kante des Kopfes schließen bevorzugt einen Winkel zwischen 50° und 90° ein. Diese Bemessung hat sich für die Unterdrückung von Sprühnebel als besonders wirkungsvoll erwiesen; der optimale Winkel liegt in der Größenordnung von 65°. Um die Unterdrückung von Sprühnebel weiter zu verbessern, sind in dem Fall, daß die Kanäle horizontal angeordnet sind, an den vertikalen Kanten der Schmutzfangeinrichtung bevorzugt Randprofile angeordnet, die eine Abflußrinne besitzen, welche die Kanäle seitlich abschließt. Auf diese Weise wird das aus den Kanälen seitlich austretende Wasser zusammengeführt und gemeinsam nach unten in Richtung auf die Straßenoberfläche geleitet. Das aus den Kanälen seitlich austretende Wasser kann auf diese Weise nicht von dem Fahrtwind und den entsprechenden Wirbeln zerstäubt werden. Entsprechend der Zunahme der Menge des abfließenden Wassers von oben nach unten kann die Abflußrinne sich von oben nach unten konisch erweitern. Dadurch werden Verstopfungen in der Abflußrinne vermieden und die Selbstreinigung der Schmutzfängeinrichtung begünstigt. Die Randprofile besitzen dabei zweckmäßigerweise eine in Richtung auf das Fahrzeugrad vorspringende Lippe, welche beispielsweise bei starkem Seitenwind zusätzlich aufgeschleuderte Feuchtigkeit auffängt und gesammelt nach unten ableitet. Dieser Effekt läßt sich noch dadurch verbessern, daß die Lippen der Randprofile geringfügig nach einwärts gekrümmt sind.

Die erfindungsgemäßen Schmutzfangeinrichtungen sind bevorzugt aus Gummi, anderen Elastomeren oder aus einem thermoplastischen Kunststoff im Spritzgußverfahren hergestellt; ebenso kommt ein Herstellen durch Extrudieren in Frage. Darüber hinaus ist auch Polyurethan zur Herstellung der Schmutzfangeinrichtung geeignet. Sämtliche genannten Materialien verfügen über eine ausreichende Festigkeit bei guter Elastizität, so daß die Selbstreinigung in Folge Abblätterns von angetrocknetem Schmutz begünstigt wird.

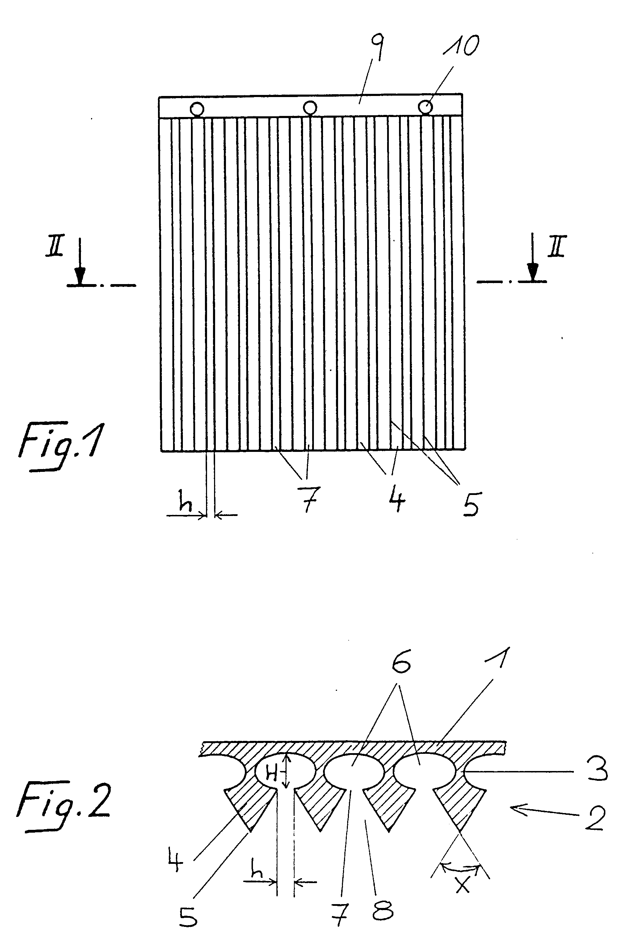

Im folgenden wird ein Ausführungsbeispiel der Erfindung anhand der Zeichnung näher erläutert. Es zeigt
- Fig. 1: eine Draufsicht auf einen Schmutzfänger zur Befestigung an einem Kotflügel und
- Fig. 2: einen Horizontalschnitt gemäß Linie II-II von Fig. 1 in vergrößerter Darstellung.

Der Schmutzfänger besteht aus einer vertikalen Rückwand 1, von welcher in Richtung auf das Fahrzeugrad Rippen 2 vorspringen. Die Rippen 2 bestehen aus je einem vertikalen Steg 3 und einem mit diesem verbundenen Kopf 4, welcher eine dreiecksprismatische Form besitzt. Der Winkel X, der auf das Fahrzeugrad gerichteten Kante 5 des Kopfes 4 beträgt 65°.

Von der Rückwand 1, je zwei Stegen 3 und je zwei Köpfen 4 ist je ein Kanal 6 mit elliptischem Querschnitt begrenzt. Die großen Halbachsen der Ellipsen liegen dabei parallel zur Rückwand 1.

Je zwei dreiecksprismatische Köpfe 4 sind in der Weise zueinander angeordnet, daß zwischen ihnen eine schlitzförmige Eintrittsöffnung 7 zu jedem Kanal 6 gebildet wird. Durch die dreiecksprismatische Form der Köpfe 4 der Rippen 2 entsteht vor den schlitzförmigen Eintrittsöffnungen 7 ein sich in Richtung auf das Fahrzeugrad erweiternder Einfangsrichter 8. Der Öffnungswinkel des Einfangstrichters entspricht dabei dem Winkel X der Kante 5, nämlich 65°.

Die geringste Abmessung h der schlitzförmigen Eintrittsöffnungen 7 beträgt etwa Hälfte der kleinen Halbachse H der elliptischen Kanäle 6.

An seiner Oberkante besitzt der Schmutzfänger eine Befestigungsschiene 9 mit Bohrungen 10 zur Befestigung des Schmutzfängers an einem (nicht dargestellten) Kotflügel.

## Patentansprüche

1. Schmutzfangeinrichtung zum Zusammenwirken mit einem Kotflügel eines Fahrzeuges, wobei die dem Fahrzeugrad zugewandte Seite der Schmutzfangeinrichtung Kanäle (6) aufweist, mit sich in Richtung auf das Fahrzeugrad erweiternden Einfangtrichtern (8) welche zwischen je zwei, eine im wesentlichen dreiecksprismatische Form besitzenden Köpfen (4) von zwischen je zwei Kanälen angeordneten Rippen (2) gebildet werden, dadurch gekennzeichnet, daß Kanäle (6) einen elliptischen Querschnitt aufweisen und mit schlitzförmigen Eintrittsöffnungen (7) versehen sind, deren geringste Abmessung (h) kleiner ist als die kleine Halbachse (H) der elliptischen Kanäle (6), und daß die Einfangstrichter (8) den Eintritt öffnungen (7) vorgeschaltet sind.

2. Schmutzfangeinrichtung nach Anspruch 1,
dadurch gekennzeichnet,
daß die Mittelachse der Eintrittsöffnungen (7) jeweils mit der kleinen Halbachse der elliptischen Kanäle (6) zusammenfällt.

3. Schmutzfangeinrichtung nach Anspruch 1,
dadurch gekennzeichnet,
daß die Kanäle (6) vertikal angeordnet sind.

4. Schmutzfangeinrichtung nach Anspruch 3,
dadurch gekennzeichnet,
daß sich die Kanäle (6) von oben nach unten konisch erweitern.

5. Schmutzfangeinrichtung nach Anspruch 1,
dadurch gekennzeichnet,
daß die Köpfe (4) der Rippen (2) Hohlräume besitzen.

6. Schmutzfangeinrichtung nach Anspruch 1,
dadurch gekennzeichnet,
daß die Außenflächen der dem Fahrzeugrad zugewandten Kanten (5) der Köpfe (4) Winkel (X) von 50° bis 90° einschließen.

7. Schmutzfangeinrichtung nach Anspruch 6,
dadurch gekennzeichnet,
daß der Winkel (X) 65° beträgt.

8. Schmutzfangeinrichtung nach Anspruch 1,
dadurch gekennzeichnet,
daß die die Köpfe (4) tragenden Stege (3) der Rippen (2) so schmal ausgebildet sind, daß die Köpfe (4) gegeneinander bewegt werden können.

9. Schmutzfangeinrichtung nach Anspruch 1,
dadurch gekennzeichnet,
daß sie aus Gummi besteht.

10. Schmutzfangeinrichtung nach Anspruch 1,
dadurch gekennzeichnet,
daß sie aus einem thermoplastischen Kunststoff besteht.

## Claims

1. Dirt trap for cooperating with a mud-guard of a vehicle, the side of the dirt trap facing the vehicle wheel comprising channels (6) with collecting funnels (8) widening out in the direction of the vehicle wheel, which funnels are formed between respectively two heads (4), having a substantially triangular prismatic shape, of ribs ( 2) arranged between two respective channels, characterised in that the channels (6) have an elliptical cross-section and are provided with slot-like inlet openings (7), whereof the smallest dimension (h) is less than the small half-axis (H) of the elliptical channels (6) and that the collecting funnels (8) precede the inlet openings (7).

2. Dirt trap according to Claim 1, characterised in that the central axis of the inlet openings (7) coincides respectively with the small half-axis of the elliptical channels (6).

3. Dirt trap according to Claim 1, characterised in that the channels (6) are arranged vertically.

4. Dirt trap according to Claim 3, characterised in that the channels (6) widen out conically from the top downwards.

5. Dirt trap according to Claim 1, characterised in that the heads (4) of the ribs ( 2) comprise cavities.

6. Dirt trap according to Claim 1, characterised in that the outer surfaces of the edges (5) of the heads (4) facing the vehicle wheel enclose angles (X) of 50° to 90°.

7. Dirt trap according to Claim 6, characterised in that the angle (X) amounts to 65°.

8. Dirt trap according to Claim 1, characterised in that the webs (3) of the ribs ( 2), supporting the heads (4), are constructed to be so narrow that the heads (4) can be moved towards each other.

9. Dirt trap according to Claim 1, characterised in that it consists of rubber.

10. Dirt trap according to Claim 1, characterised in that it consists of a thermoplastic synthetic material.

## Revendications

1. Dispositif de captage de la poussière, devant coopérer avec une aile d'un véhicule, où le côté, tourné vers la roue de véhicule, du dispositif de captage de poussière présente des canaux (6), avec des entonnoirs de captage (8) allant en s'élargissent en direction de la roue du véhicule et entre chaque couple d'entonnoirs étant formées des têtes (4), présentant une forme sensiblement prismatique, de nervures (2) disposées entre chaque couple de canaux, caractérisé en ce que les canaux (6) présentent une section transversale elliptique et sont pourvus d'ouvertures d'entrée (7) en forme de fentes, dont la plus petite dimension (h) est inférieure au petit demi-axe (H) des canaux elliptiques (6) et en ce que les entonnoirs de captage (8) sont situés en amont des ouvertures d'entrée (7).

2. Dispositif de captage de la poussière selon la revendication 1, caractérisé en ce que l'axe médian des ouvertures d'entrée (7) coïncide chaque fois avec le petit demi-axe des canaux elliptiques.

3. Dispositif de captage de la poussière selon la revendication 1, caractérisé en ce que les canaux (6) sont disposés verticalement.

4. Dispositif de captage de la poussière selon la revendication 3, caractérisé en ce que les canaux (6) vont en s'élargissent de façon conique, de haut en bas.

5. Dispositif de captage de la poussière selon la revendication 1, caractérisé en ce que les têtes (4) des nervures (2) comportent des espaces creux.

6. Dispositif de captage de la poussière selon la revendication 1, caractérisé en ce que les faces extérieures des arêtes (5), tournées vers la roue de véhicule, des têtes (4) font un angle (X) de 50° à 90°.

7. Dispositif de captage de la poussière selon la revendication 6, caractérisé en ce que l'angle (X) est de 65°.

8. Dispositif de captage de la poussière selon la revendication 1, caractérisé en ce que les âmes (3), portant les tètes (4), des nervures (2) sont si étroites que les têtes (4) peuvent être déplacées les unes par rapport aux autres.

9. Dispositif de captage de la poussière selon la revendication 1, caractérisé en ce qu'il consiste de caoutchouc.

10. Dispositif de captage de la poussière selon la revendication 1, caractérisé en ce qu'il consiste en matière thermoplastique.
